# EUROPÄISCHE PATENTSCHRIFT

(11) **EP 3 538 785 B1**
(45) Veröffentlichungstag und Bekanntmachung des Hinweises auf die Patenterteilung: **21.10.2020**
(21) Anmeldenummer: 17804091.1
(22) Anmeldetag: 07.11.2017
(51) Int. Cl.: F16D 65/12

(54) **TRÄGERTOPF FÜR EINE BREMSSCHEIBE, BREMSSCHEIBENEINRICHTUNG**
CARRIER POT FOR A BRAKE DISC, BRAKE DISC ARRANGEMENT
COUPELLE DE SUPPORT SERVANT À UN DISQUE DE FREIN, SYSTÈME DE DISQUE DE FREIN

(30) Priorität: 09.11.2016 DE 102016221969
(43) Veröffentlichungstag der Anmeldung: 18.09.2019
(73) Patentinhaber: Robert Bosch GmbH, 70442 Stuttgart (DE)
(72) Erfinder: HUSCHENHOEFER, Wolfgang, 35614 Asslar (DE); BAHROUN, Karim, 70569 Stuttgart (DE)
(86) Internationale Anmeldenummer: PCT/EP2017/078383
(87) Internationale Veröffentlichungsnummer: WO 2018/087053

(56) Entgegenhaltungen:
- EP-A2- 1 107 007
- DE-A1-102013 201 303
- US-A1- 2013 032 440

## Beschreibung

Die Erfindung betrifft einen Trägertopf für eine Bremsscheibe, mit einem radial innenliegenden Nabenringabschnitt zur Befestigung an einer Radachse und mit einem radial außenliegenden Bremsscheibenabschnitt zur Befestigung einer Bremsscheibe.

Weiterhin betrifft die Erfindung eine Bremsscheibeneinrichtung für eine Radbremse eines Fahrzeugs, insbesondere Kraftfahrzeug, mit wenigstens einer Bremsscheibe und mit wenigstens einem Trägertopf, der mit der Bremsscheibe drehfest verbunden ist.

### Stand der Technik

Trägertöpfe und Bremsscheibeneinrichtungen der eingangs genannten Art sind aus dem Stand der Technik bereits bekannt. Üblicherweise weisen Bremsscheibeneinrichtungen eine Bremsscheibe und einen Trägertopf auf, die drehfest miteinander verbunden sind, wobei die Bremsscheibe dabei in der Regel an dem radial außenliegenden Bremsscheibenringabschnitt des Trägertopfs befestigt, insbesondere verschraubt und/oder verschweißt ist. Der Trägertopf dient dabei als Verbindung zwischen Bremsscheibe und Radachse, sodass über den Trägertopf bei einem Bremsvorgang die Bremskräfte auf die Radachse übertragen werden. Damit werden an den Trägertopf hohe Anforderungen an Belastbarkeit und Dauerhaltbarkeit gestellt. Um diese Bedingungen zu erfüllen, werden bekannte Trägertöpfe daher häufig aus Grauguss oder Aluminium, insbesondere einstückig zusammen mit der Bremsscheibe gefertigt. Bei einer zweiteiligen Ausbildung einer Bremsscheibeneinrichtung ist es bekannt, den Trägertopf aus einem anderen Material als die Bremsscheibe selbst zu fertigen, um beide Elemente optimal auf ihrer jeweiligen Beanspruchungen anzupassen. Dabei ist man außerdem bestrebt, Gewichtseinsparungen zu erreichen, um beispielsweise einen Kraftstoffverbrauch des Kraftfahrzeugs zu reduzieren.

Aus der Offenlegungsschrift DE 10 2013 201303 A1 ist bereits eine Bremsscheibe der gattungsgemäßen Art bekannt. Auch die Offenlegungsschriften EP 1107 007 A2 und US 2013/0032440 A1 offenbaren jeweils Bremsscheiben mit einem Nabenringabschnitt und einem Bremsscheibenabschn itt.

### Offenbarung der Erfindung

Der Trägertopf mit den Merkmalen des Anspruchs 1 hat den Vorteil, dass er zum einen gewichtseinsparend gefertigt ist und zum anderen eine Überwachung des Verhaltens der Bremsscheibeneinrichtung an einer ungefederten Masse des die Bremsscheibeneinrichtung aufweisenden Fahrzeugs beziehungsweise Kraftfahrzeugs erlaubt. Dazu ist erfindungsgemäß vorgesehen, dass der Trägertopf aus einem Faserkunststoffverbund gefertigt ist und wenigstens ein in den Faserkunststoffverbund integriertes elektrisches/elektronisches Funktionsbauteil aufweist. Damit ist in den Trägertopf ein elektrisches/elektronisches Funktionsbauteil integriert, was aufgrund des schichtweisen Aufbaus eines Faserkunststoffverbundwerkteils ohne großen Zusatzaufwand möglich ist. Dabei erfolgt die Anordnung des Funktionsbauteils sicher und dauerhaft am Trägertopf, wobei auch hohe Belastungen, insbesondere hohe Beschleunigungen, die auf das Funktionsbauteil wirken, zu keiner Gefahr für das Funktionsbauteil werden. Durch die Fertigung des Trägertopfs aus einem Faserkunststoffverbund erhält dieser ein vergleichsweise geringes Gewicht. Durch die vorteilhafte Einbindung des Funktionsbauteils bietet der Trägertopf außerdem die Möglichkeit, den Zustand des Trägertopfs und/oder der Bremsscheibeneinrichtung auf einfache Art und Weise zu überwachen, ohne dass hierdurch eine nachteilige Gewichtszunahme erfolgt. Durch das integrierte Funktionsbauteil lässt sich beispielsweise eine kontinuierliche Überwachung des Zustands des Trägertopfs als sicherheitsrelevante Komponente der Bremsscheibeneinrichtung und des Fahrzeugs durchführen. Auch ist es möglich, durch das Funktionsbauteil Umgebungswerte in der Direktumgebung zu dem Trägertopf zu erfassen, und beispielsweise bei der Ansteuerung einer die Bremsscheibeneinrichtung aufweisenden Radbremse zu berücksichtigen. Insbesondere ist das Funktionsbauteil derart in den Faserkunststoffverbund intergiert, dass es nicht ohne Zerstörung von Material aus diesem entfernt werden kann. Dadurch ist die Echtheit des Trägertopfs stets gewährleistet und eine Manipulation durch Dritte nicht oder zumindest nicht unbemerkt durchführbar.

Gemäß einer bevorzugten Weiterbildung der Erfindung ist vorgesehen, dass das Bauteil von dem Faserkunststoffverbund vollständig eingehaust ist. Damit ist das Funktionsbauteil vollständig innerhalb des Trägertopfs angeordnet und liegt dadurch sicher vor äußeren Einflüssen geschützt.

Alternativ ist bevorzugt vorgesehen, dass das Funktionsbauteil von dem Faserkunststoffverbund nur teilweise eingehaust ist. Dadurch hat das Funktionsbauteil einen Zugang zur Umgebung des Trägertopfs, um beispielsweise in der Ausbildung eines Sensors Umgebungswerte des Trägertopfs erfassen zu können oder in der Ausbildung einer drahtgebundenen beziehungsweise drahtlosen Signalleitung erfasste Werte an ein Datenverarbeitungssystem weiterzuleiten.

Besonders bevorzugt ist vorgesehen, dass das Funktionsbauteil durch den Faserkunststoffverbund formschlüssig befestigt ist, sodass die Position des Funktionsbauteils an dem Trägertopf dauerhaft gewährleistet ist. Insbesondere können auch hohe Beschleunigungen, die auf das Funktionsbauteil wirken, nicht zu einer Veränderung der Position des Funktionsbauteils führen.

Weiterhin ist bevorzugt vorgesehen, dass das Funktionsbauteil zumindest ein Sensormodul aufweist, das einen Inertialsensor, Beschleunigungssensor, Geschwindigkeitssensor, Lagesensor, Temperatursensor, Drucksensor, Materialspannungssensor und/oder Feuchtigkeitssensor aufweist. Das Funktionsbauteil ist somit letztendlich insbesondere ein Sensormodul zur Erfassung von Bewegungs- und/oder Belastungswerten, die den Trägertopf betreffen. Auch ist es möglich, insbesondere in Ausbildung als Feuchtigkeitssensor oder Drucksensor, insbesondere Luftdrucksensor, Umgebungsbedingungen des Trägertopfs zu ermitteln.

Gemäß einer vorteilhaften Weiterbildung der Erfindung ist vorgesehen, dass das Funktionsbauteil beziehungsweise die elektrische Schaltung eine Energieversorgungseinrichtung aufweist, die insbesondere einen elektrischen Generator und/oder einen Empfänger zur drahtlosen Energieversorgung aufweist. Dadurch ist eine einfache Versorgung insbesondere des Sensormoduls mit elektrischer Energie gewährleistet.

Weiterhin ist bevorzugt vorgesehen, dass das Funktionsbauteil eine Kommunikationsschnittstelle aufweist, die dazu ausgebildet ist, Daten berührungsfrei und/oder berührend zu senden und/oder zu empfangen. Dadurch ist es insbesondere möglich, dass die von dem Sensormodul ermittelten/erfassen Daten durch ein externes Steuergerät, Prüfgerät und/oder Auswertegerät berührungsfrei und/oder berührend erfasst beziehungsweise abgefragt werden können.

Bevorzugt weist der Trägertopf mehrere Funktionsbauteile auf, die über den Umfang des Trägertopfs gleichmäßig verteilt angeordnet sind. Durch die gleichmäßig verteilte Anordnung wird gewährleistet, dass an dem Trägertopf keine Unwucht entsteht, welche den Betrieb beeinflussen könnte.

Weiterhin ist bevorzugt vorgesehen, dass das Funktionsbauteil eine Identifikationseinrichtung aufweist, insbesondere einen RFID-Chip. Damit ist der Trägertopf beispielswiese berührungslos durch beispielsweise einen Monteur identifizierbar. Aufgrund der unverlierbaren Integration des Funktionsbauteils in den Trägertopf ist die Identifizierung damit eindeutig und nicht manipulierbar. Darüber hinaus ist bevorzugt vorgesehen, dass das Funktionsbauteil einen Energiespeicher und/oder einen Energieerzeuger aufweist. Die Energieerzeugung kann durch Wandlung der im Anwendungsfall ins Bauteil eingebrachten kinetischen Energie oder durch drahtlose Energieübertragung erfolgen. Damit ist Energieversorgung des Funktionsbauteils und somit die Erfassung der Umgebungsbedingungen ohne zusätzliche Kontaktierung möglich. Insbesondere sind der Energiespeicher und/oder der Energieerzeuger Bestandteil der zuvor genannten Engieversorgungseinrichtung.

Die erfindungsgemäße Bremsscheibeneinrichtung mit den Merkmalen des Anspruchs 8 zeichnet sich durch die erfindungsgemäße Ausbildung des Trägertopfs aus. Es ergeben sich hierdurch die bereits genannten Vorteile.

Weitere Vorteile und bevorzugte Merkmale und Merkmalskombinationen ergeben sich insbesondere aus dem zuvor Beschriebenen sowie aus den Ansprüchen.

Im Folgenden soll die Erfindung anhand eines Ausführungsbeispiels näher erläutert werden. Dazu zeigen
- Figur 1: einen vorteilhaften Trägertopf für eine Bremsscheibeneinrichtung und
- Figur 2: eine Schnittdarstellung des Trägertopfs in einer Detailansicht.

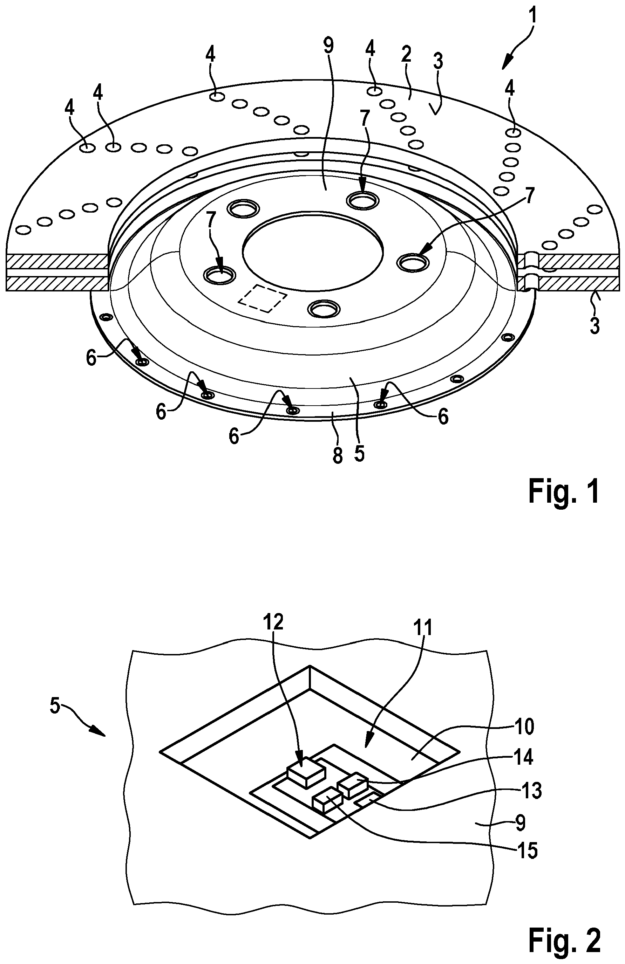

Figur 1 zeigt in einer perspektivischen Schnittdarstellung eine Bremsscheibeneinrichtung 1 für eine Radbremse eines Kraftfahrzeugs. Eine Radbremse in herkömmlichen Kraftfahrzeugen weist üblicherweise einen Bremssattel auf, an welchem Bremsbeläge angeordnet sind, zwischen denen eine Bremsscheibe geführt ist. Werden die Bremsbeläge in Richtung der Bremsscheibe bewegt, wird diese zwischen ihnen eingeklemmt und dadurch eine Bremskraft beziehungsweise ein Bremsmoment erzeugt.

Die in Figur 1 gezeigte Bremsscheibe 2 der Bremsscheibeneinrichtung 1 ist dazu zweckmäßigerweise punktsymmetrisch zur Achse beziehungsweise kreisrund ausgebildet. An ihren axialen Stirnseiten weist sie Bremsflächen 3 auf, die mit den Bremsbelägen der Radbremse zusammenwirken. Die Bremsbeläge sind kreisringförmig ausgebildet und weisen vorliegend mehrere Belüftungsöffnungen 4 zur Kühlung der Bremsscheibeneinrichtung 1 im Betrieb auf. Die Kühlung ist vorteilhaft, weil Bremsscheiben eines Bremsvorgangs hohen mechanischen und thermischen Belastungen ausgesetzt sind. Ursächlich hierfür ist, dass bei der Verzögerung des die Bremsscheibeneinrichtung aufweisenden Fahrzeugs nahezu die gesamte im Fahrzeug gespeicherte kinetische Energie in Wärme umgewandelt werden muss. Weil die Bremsscheibe 2 im Fahrzeug eine ungefederte, rotierende Masse darstellt, bestehen Bestrebungen, die Masse der Bremsscheibe 2 zu reduzieren.

Die Bremsscheibe 2 ist fest mit einem Trägertopf 5 verbunden, welcher an einer Radnabe oder an einer Felge eines Rads des Fahrzeugs befestigbar ist, um die Bremskräfte auf das Rad zu übertragen. Bei herkömmlichen Bremsscheibeneinrichtungen sind der Trägertopf 5 und die Bremsscheibe 2 einstückig miteinander, beispielsweise durch ein Graugussverfahren, hergestellt. Um die Masse der Bremsscheibeneinrichtung 1 zu reduzieren, ist es mittlerweile auch bekannt, Trägertopf 5 und Bremsscheibe 2 getrennt voneinander auszubilden, um vorteilhafte Materialkombinationen für Trägertopf 5 und Bremsscheibe 2, insbesondere für den Reibring der Bremsscheibe 2, zu ermöglichen. Dabei ist es bekannt, neben dem Grauguss auch Aluminium, Stahl oder Silizumkarbid-Keramiken einzusetzen. Trägertopf 5 und Bremsscheibe 2 werden dann durch unterschiedlichste Verbindungsverfahren miteinander verbunden, wie beispielsweise Verbolzen, Verschrauben oder Vergießen.

Bei der in Figur 1 gezeigten Bremsscheibeneinrichtung 1 weist der Trägertopf 5 mehrere Befestigungsstellen 6 und 7 auf, die zur Befestigung des Trägertopfs 5 an der Bremsscheibe 2 und an der Radnabe dienen. Dazu sind die Befestigungsstellen 6 an einem radial außenliegenden Bremsscheibenringabschnitt 8 ausgebildet und gleichmäßig über den Umfang des Trägertopfs 5 verteilt angeordnet. Die Befestigungsstellen 7 sind an einem radial innenliegenden Radnabenringabschnitt 9 des Trägertopfs 5 gleichmäßig über den Umfang verteilt angeordnet. An den Befestigungsstellen 6 erfolgt die Verbindung zu der Bremsscheibe 2 und an den Befestigungsstellen 7 die Verbindung zu der Radnabe.

Die Befestigungsstellen 6 sind gemäß dem vorliegenden Ausführungsbeispiel als Befestigungsöffnungen ausgebildet, welche zum Verschrauben, Verbolzen oder Vernieten des Trägertopfs 5 mit der Radnabe beziehungsweise mit der Bremsscheibe 2 dienen. Alternativ können zumindest einige der Befestigungsstellen 6 und/oder 7 auch als insbesondere zapfenförmige Vorsprünge an dem Trägertopf 5 ausgebildet sein. Auch können die Befestigungsstellen 6 als Taschen ausgebildet sein, in welchen ein separater Befestigungsbolzen eingegossen beziehungsweise eingeformt ist, der von dem Trägertopf 5 axial jeweils vorsteht. Vorzugsweise sind die Befestigungsstellen 6 derart ausgeführt, dass sie durch die Belüftungsbohrungen 4 oder ähnliche Kühlvorrichtungen, wie beispielsweise Luftspalte der Bremsscheibe, oder durch den Einsatz wärmedämmender Materialien im Bereich der Befestigungsstellen 6 wie z.B. Keramikbuchsen oder keramische Beschichtungen auch bei hohen thermischen Belastungen geschützt sind.

Gemäß dem vorliegenden Ausführungsbeispiel ist der Trägertopf 5 aus einem Faserkunststoffverbund gefertigt, der eine ausreichend hohe mechanische und thermische Belastbarkeit bei besonders geringem Gewicht gewährleistet.

Figur 2 zeigt eine Detailansicht des Trägertopfs 5 im Bereich des Radnabenringabschnitts 9, wie durch ein gestricheltes Kästchen in Figur 1 gezeigt. Dabei ist der Trägertopf 5 derart geschnitten, dass er in der Ebene des Radnabenringabschnitts 9 beziehungsweise senkrecht zur Drehachse geschnitten ist. Damit ist in Figur 2 zu erkennen, dass der Trägertopf 5 in dem Radnabenringabschnitt 9 eine Aufnahmeaussparung 10 aufweist. Hierbei ist auch zu erkennen, dass der Faserkunststoffverbund mehrere Schichten, die bevorzugt jeweils gleich orientierte beziehungsweise verlaufenden Fasern aufweist, wobei die Fasern der benachbarten beziehungsweise aufeinanderliegenden Schichten vorzugsweise unterschiedlich, vorliegend senkrecht zueinander ausgerichtet sind. Hierdurch wird eine hohe Festigkeit des Trägertopfs 5 gewährleistet, sodass auch hohe Bremskräfte durch den Trägertopf 5 in beide Drehrichtungen übertragen werden können. Durch die Schnittdarstellung von Figur 2 ist beispielsweise zumindest eine der oberen Schichten entfernt, sodass der Blick auf die Aufnahmeaussparung 10 frei ist.

In der Aufnahmeaussparung 10 ist ein elektrisches/elektronisches Funktionsbauteil 11 angeordnet. Während gemäß dem vorliegenden Ausführungsbeispiel die Aufnahmeaussparung 10 deutlich größer ausgebildet ist als das Funktionsbauteil 11, ist bevorzugt vorgesehen, dass die Aussparung 10 der Größe des Funktionsbauteils 11 entspricht.

Insbesondere ist vorgesehen, dass das Funktionsbauteil 11 bei der Fertigung des Trägertopfs 5 derart in den Trägertopf 5 integriert ist, dass er durch die Faserkunststoffverbundschichten vollständig eingehaust wird. Zweckmäßigerweise ist die Aufnahmeaussparung 10 in derart vielen Schichten ausgebildet, dass das Funktionsbauteil 11 vollständig darin aufnehmbar ist. Alternativ wird das Funktionsbauteil 11 einfach zwischen zwei benachbarte Schichten bei der Fertigung des Trägertopfs 5 eingelegt und dadurch automatisch durch die Schichten des Trägertopfs 5 bei der Fertigung eingehaust.

Bei dem Funktionsbauteil 11 handelt es sich insbesondere um eine elektrische Schaltung, die zumindest ein Sensormodul 12 aufweist, das beispielsweise einen Inertialsensor, Beschleunigungssensor, Lagesensor, Temperatursensor, Drucksensor, Materialspannungssensor und/oder Geschwindigkeitssensor aufweist, um Betriebszustände des Trägertopfs 5 direkt in diesem zu erfassen. Auch kann vorgesehen sein, dass das Sensormodul 12 einen Temperatursensor oder Feuchtigkeitssensor aufweist, welcher die Umgebungstemperatur des Trägertopfs 5 erfassen soll. Dazu ist dann bevorzugt vorgesehen, dass das Funktionsbauteil 11 nicht vollständig von dem Faserkunststoffverbund eingehaust ist, sondern zumindest abschnittsweise Zugang zur Umgebung des Trägertopfs 5 hat. Dazu ist beispielsweise die Aufnahmeaussparung 10 derart ausgebildet, dass eine direkte Verbindung zur Umgebung vorliegt.

Die Schaltung beziehungsweise das Funktionsbauteil 11 weist weiterhin bevorzugt eine dem Sensormodul 12 zugeordnete Kommunikationsschnittstelle 15 auf, sodass die von dem Sensormodul 12 erfassten Daten berührend oder berührungsfrei durch ein externes Steuergerät, Prüfgerät oder Auswertegerät erfasst werden können. Auch kann vorgesehen sein, dass das Sensormodul eine Energieversorgungseinrichtung 14 aufweist, sodass der Betrieb des Sensormoduls 12 ohne externe Energieversorgung erfolgen kann.

Durch die Anordnung des Funktionsbauteils 11 an dem Trägertopf 5 ist dieses an einer ungefederten Masse des Fahrzeugs angeordnet, wodurch im Vergleich zu bekannten Lösungen zur Zustandserfassung genauere Daten ermittelt werden und zur Verfügung stehen. Mittels des Funktionsbauteils 11 ist eine kontinuierliche Überwachung des Zustands des Trägertopfs 5 als sicherheitsrelevante Komponente gewährleistet. Außerdem können Umgebungsbedingungen der Bremsscheibeneinrichtung 1, insbesondere des Trägertopfs 5 miterfasst werden, wie beispielsweise die Luftfeuchtigkeit und/oder Luftdruck. In Abhängigkeit dieser Werte kann wiederum die Bremsscheibeneinrichtung 1 vorteilhaft angesteuert werden. Durch die unlösbar beziehungsweise unverlierbare Verbindung zwischen Trägertopf 5 und Funktionsbauteil 11 ist außerdem eine Manipulation des Funktionsbauteils 11 durch Dritte nicht möglich. Ist das Funktionsbauteil 11 insbesondere als Identifikationseinrichtung 13 ausgebildet oder weist eine solche auf, ist darüber hinaus eine eindeutige Identifizierung des Trägertopfs 5 jederzeit möglich.

Vorteilhafterweise weist der Trägertopf 5 mehrere derartiger Funktionsbauteile 11 auf, die in den Trägertopf 5 beziehungsweise in Faserkunststoffverbund integriert sind. Die mehreren Funktionsbauteile 11 sind dann zweckmäßigerweise gleichmäßig über den Umfang des Trägertopfs 5 verteilt angeordnet, um Unwuchten zu vermeiden. Bevorzugt weist der Trägertopf 5 wenigstens ein Funktionsbauteil 11, das als Sensormodul 12 ausgebildet ist, sowie ein Funktionsmodul 11, das als Identifizierungseinrichtung 13 ausgebildet ist, auf.

Durch die vorteilhafte Integration des Funktionsbauteils 11 in den Trägertopf 5 ist eine hochpräzise Geschwindigkeitsmessung direkt an der Achse des Fahrzeugs möglich. Außerdem kann die Fahrzeugdynamik des Fahrzeugs, insbesondere eine Tordierung des Fahrzeugs, ein Haftreibungsverlust, Ausscheren, Rutschen oder dergleichen ermittelt werden. Darüber hinaus ist die dauerhafte beziehungsweise kontinuierliche Überwachung des Zustands der Bremsscheibe 2 und insbesondere des Trägertopfs 5 möglich. Durch eine aktive Regelung, beispielsweise aktive Kühlung, oder durch eine Warnung des Fahrers ist ein plötzlicher Bremskraftverlust unter Berücksichtigung des ermittelten Zustands des Trägertopfs 5 und/oder dessen Umgebung gewährleistet.

## Patentansprüche

1. Trägertopf (5) für eine Bremsscheibe (2), mit einem radial innenliegenden Nabenringabschnitt (9) zur Befestigung an einer Radachse und mit einem radial außenliegenden Bremsscheibenringabschnitt (8) zur Befestigung an der Bremsscheibe (2), **dadurch gekennzeichnet, dass** der Trägertopf (5) aus einem Faserkunststoffverbund gefertigt ist und wenigstens ein in den Faserkunststoffverbund integriertes elektrisches/elektronisches Funktionsbauteil (11) aufweist.

2. Trägertopf nach Anspruch 1, **dadurch gekennzeichnet, dass** das Funktionsbauteil (11) von dem Faserkunststoffverbund vollständig eingehaust ist.

3. Trägertopf nach einem der vorhergehenden Ansprüche, **dadurch gekennzeichnet, dass** das Funktionsbauteil (11) von dem Faserkunststoffverbund nur teilweise eingehaust ist.

4. Trägertopf nach einem der vorhergehenden Ansprüche, **dadurch gekennzeichnet, dass** das Funktionsbauteil (11) durch den Faserkunststofverbund formschlüssig an dem Trägertopf (5) befestigt ist.

5. Trägertopf nach einem der vorhergehenden Ansprüche, **dadurch gekennzeichnet, dass** das Funktionsbauteil (11) ein Sensormodul (12) aufweist, das insbesondere einen Inertialsensor, Beschleunigungssensor, Geschwindigkeitssensor, Lagesensor, Temperatursensor, Materialspannungssensor, Drucksensor und/oder Funktionssensor aufweist.

6. Trägertopf nach einem der vorhergehenden Ansprüche, **dadurch gekennzeichnet, dass** das Funktionsbauteil (11) eine Energieversorgungseinrichtung (14), insbesondere einen elektrischen Generator und/oder einen Empfänger zur drahtlosen Energieversorgung aufweist.

7. Trägertopf nach einem der Ansprüche 5 oder 6, **dadurch gekennzeichnet, dass** das Funktionsbauteil (11) eine Kommunikationsschnittstelle (15) aufweist, die dazu ausgebildet ist, Daten insbesondere des Sensormoduls (12) berührungsfrei und/oder berührend zu versenden und/oder zu empfangen.

8. Trägertopf nach einem der vorhergehenden Ansprüche, **dadurch gekennzeichnet, dass** in dem Faserkunststoffverbund mehrere Funktionsbauteile gleichmäßig über den Umfang des Trägertopfs (5) verteilt angeordnet sind.

9. Trägertopf nach einem der vorhergehenden Ansprüche, **dadurch gekennzeichnet, dass** das Funktionsbauteil (11) eine Identifizierungseinrichtung (13), insbesondere einen RFID-Chip aufweist.

10. Bremsscheibeneinrichtung (1) für eine Radbremse eines Fahrzeugs, insbesondere Kraftfahrzeugs, mit wenigstens einer Bremsscheibe (2) mit wenigstens einem mit der Bremsscheibe drehfest verbundenen Trägertopf (5), **gekennzeichnet durch** die Ausbildung des Trägertopfs (5) nach einem oder mehreren der Ansprüche 1 bis 9.

## Claims

1. Carrier pot (5) for a brake disk (2), with a radially inner hub ring portion (9) for fastening to a wheel axle and with a radially outer brake disk ring portion (8) for fastening to the brake disk (2), **characterized in that** the carrier pot (5) is manufactured from a fiber-plastic composite and comprises at least one electrical/electronic functional component (11) that is integrated in the fiber-plastic composite.

2. Carrier pot according to Claim 1, **characterized in that** the functional component (11) is completely enclosed by the fiber-plastic composite.

3. Carrier pot according to either of the preceding claims, **characterized in that** the functional component (11) is only partly enclosed by the fiber-plastic composite.

4. Carrier pot according to any one of the preceding claims, **characterized in that** the functional component (11) is positively fastened to the carrier pot (5) by the fiber-plastic composite.

5. Carrier pot according to any one of the preceding claims, **characterized in that** the functional component (11) comprises a sensor module (12), which in particular comprises an inertial sensor, an acceleration sensor, a speed sensor, a position sensor, a temperature sensor, a material tension sensor, a pressure sensor and/or a function sensor.

6. Carrier pot according to any one of the preceding claims, **characterized in that** the functional component (11) comprises a power supply device (14), in particular an electrical generator and/or a receiver for supplying power wirelessly.

7. Carrier pot according to either of Claims 5 and 6, **characterized in that** the functional component (11) comprises a communications interface (15) that is designed to send and/or to receive data, in particular of the sensor module (12), contactlessly and/or with contact.

8. Carrier pot according to any one of the preceding claims, **characterized in that** a plurality of functional components are disposed uniformly distributed over the circumference of the carrier pot (5) in the fiber-plastic composite.

9. Carrier pot according to any one of the preceding claims, **characterized in that** the functional component (11) comprises an identification device (13), in particular an RFID chip.

10. Brake disk device (1) for a wheel brake of a vehicle, in particular a motor vehicle, with at least one brake disk (2) with at least one carrier pot (5) that is rotationally fixedly joined to the brake disk, **characterized by** the embodiment of the carrier pot (5) according to one or more of Claims 1 to 9.

## Revendications

1. Coupelle de support (5) pour un disque de frein (2), comprenant une portion de bague de noyau (9) située radialement à l'intérieur pour la fixation à un essieu de roue et une portion de bague de disque de frein (8) située radialement à l'extérieur pour la fixation au disque de frein (2), **caractérisée en ce que** la coupelle de support (5) est fabriquée à partir d'un composite en plastique renforcé par des fibres et présente au moins un composant fonctionnel électrique/électronique (11) intégré dans le composite en plastique renforcé par des fibres.

2. Coupelle de support selon la revendication 1, **caractérisée en ce que** le composant fonctionnel (11) est complètement logé à l'intérieur du composite en plastique renforcé par des fibres.

3. Coupelle de support selon l'une quelconque des revendications précédentes, **caractérisée en ce que** le composant fonctionnel (11) est seulement logé partiellement à l'intérieur du composite en plastique renforcé par des fibres.

4. Coupelle de support selon l'une quelconque des revendications précédentes, **caractérisée en ce que** le composant fonctionnel (11) est fixé par le composite en plastique renforcé par des fibres par engagement par correspondance de formes sur la coupelle de support (5) .

5. Coupelle de support selon l'une quelconque des revendications précédentes, **caractérisée en ce que** le composant fonctionnel (11) présente un module de capteur (12) qui présente en particulier un capteur inertiel, un capteur d'accélération, un capteur de vitesse, un capteur de position, un capteur de température, un capteur de tension du matériau, un capteur de pression et/ou un capteur de fonctionnement.

6. Coupelle de support selon l'une quelconque des revendications précédentes, **caractérisée en ce que** le composant fonctionnel (11) présente un dispositif d'alimentation en puissance (14), en particulier un générateur électrique et/ou un récepteur pour l'alimentation en puissance sans fil.

7. Coupelle de support selon l'une quelconque des revendications 5 et 6, **caractérisée en ce que** le composant fonctionnel (11) présente une interface de communication (15) qui est réalisée de manière à envoyer et/ou recevoir des données, en particulier du module de capteur (12), sans contact et/ou avec contact.

8. Coupelle de support selon l'une quelconque des revendications précédentes, **caractérisée en ce que** plusieurs composants fonctionnels sont répartis de manière uniforme dans le composite en plastique renforcé par des fibres sur la périphérie de la coupelle de support (5).

9. Coupelle de support selon l'une quelconque des revendications précédentes, **caractérisée en ce que** le composant fonctionnel (11) présente un dispositif d'identification (13), en particulier une puce RFID.

10. Dispositif de disque de frein (1) pour un frein de roue d'un véhicule, en particulier d'un véhicule automobile, comprenant au moins un disque de frein (2) avec au moins une coupelle de support (5) connectée de manière solidaire en rotation au disque de frein, **caractérisé par** la réalisation de la coupelle de support (5) selon l'une quelconque ou plusieurs des revendications 1 à 9.
